# EUROPÄISCHE PATENTSCHRIFT

(11) **EP 4 071 933 B1**
(45) Veröffentlichungstag und Bekanntmachung des Hinweises auf die Patenterteilung: **31.01.2024**
(21) Anmeldenummer: 22163801.8
(22) Anmeldetag: 23.03.2022
(51) Int. Cl.: H01R 3/00, H01R 13/447, H01R 13/514, H01R 24/78, H02G 3/12, H01R 103/00, H01R 31/06

(54) **MODULARE MULTIFUNKTIONSSTECKDOSE**
MODULAR MULTIFUNCTIONAL SOCKET
PRISE MULTIFONCTION MODULAIRE

(30) Priorität: 23.03.2021 DE 102021202781
(43) Veröffentlichungstag der Anmeldung: 12.10.2022
(73) Patentinhaber: Homeway GmbH, 96465 Neustadt/Coburg (DE)
(72) Erfinder: STEGNER, Peter, Neustadt b. Coburg (DE); KEMMANN, Harald, Lautertal (DE)
(74) Vertreter: Isarpatent

(56) Entgegenhaltungen:
- CH-A5- 684 042
- DE-U1-202015 102 508
- FR-A1- 3 000 312
- US-A1- 2006 185 878

## Beschreibung

### GEBIET DER ERFINDUNG

Die vorliegende Erfindung betrifft eine modulare Multifunktionssteckdose.

### TECHNISCHER HINTERGRUND

Elektro-Installationssysteme in der Gebäudetechnik zum Anschluss an Niederspannungsanlagen umfassen elektromechanische Komponenten, z.B. Schalter und Steckdosen, sowie elektronische Komponenten, z.B. Unterputzeinsätze und Bedienaufsätze. Eine Steckdose dient dabei als elektrischer Steckverbinder zwischen elektrischen Leitungen und kann beispielsweise fest auf einer Wand (Aufputz) oder in dieser versenkt (Unterputz) installiert werden. Weiterhin kann eine Steckdose Bestandteil einer mobilen Leitungskupplung sein, z.B. als Tisch- und/oder Mehrfachsteckdose.

Steckdosen werden insbesondere für die Stromversorgung elektrischer Verbraucher mit Einphasen- oder Mehrphasenwechselstrom genutzt. Aber auch Telefon-, Datenübertragungs- und/oder Multimediaverbindungsdosen werden als Steckdosen bezeichnet. Beispielsweise beschreibt die Druckschrift DE 20 2019 002 622 U1 eine Multimedia-Steckdose für ein Heimnetzwerk, welche Anschlüsse für Kupferkabel (z.B. Koaxialkabel und/oder TV/Radiokabel) und für optische Leitungen (Glasfaserkabel) in einem gemeinsamen Steckdosengehäuse unterbringt.

FR 3 000 312 A1 offenbart eine modulare Multifunktionssteckdose gemäß dem Oberbegriff des Anspruchs 1. 1

Die Druckschrift US 2015/0280410 A1 beschreibt eine intelligente Trägerbox für die kombinierte Installation von mehreren elektrischen Schaltern, Relais, Steckdosen und dergleichen in einem einzelnen Stützgehäuse.

### ZUSAMMENFASSUNG DER ERFINDUNG

Vor diesem Hintergrund liegt der vorliegenden Erfindung die Aufgabe zugrunde, die Applikationsvielfalt einer fest installierten Steckdose zu verbessern.

Erfindungsgemäß wird diese Aufgabe durch eine modulare Multifunktionssteckdose mit den Merkmalen des Patentanspruchs 1 gelöst.

Demgemäß ist vorgesehen:
- Eine modulare Multifunktionssteckdose mit einem Basisgehäuse, welches mit einer Installationsrückseite zur Unterputzinstallation der Multifunktionssteckdose und mit einer Funktionsvorderseite mit einem darin eingearbeiteten Einsteckfach zur Aufnahme jeweils genau eines von mehreren auswechselbaren Funktionsmodulen zur Bereitstellung von unterschiedlichen Nutzerfunktionen ausgebildet ist, mit einer Stromzugangsvorrichtung, welche an der Installationsrückseite an dem Basisgehäuse zum elektrischen Anschluss der Multifunktionssteckdose an eine Niederspannungsanlage ausgebildet ist, und mit einer Stromkontaktvorrichtung, welche mit der Stromzugangsvorrichtung durch das Basisgehäuse hindurch elektrisch gekoppelt und an der Funktionsvorderseite in dem Einsteckfach elektrisch berührungsgeschützt mit elektrischen Kontakten zur Kontaktierung entsprechender elektrischer Gegenkontakte eines in das Einsteckfach eingesteckten Funktionsmoduls ausgebildet ist; wobei die elektrischen Kontakte der Stromkontaktvorrichtung in dem Einsteckfach als berührungsgeschützte Steck- und/oder Klemmkontakte zur Aufnahme von Kontaktbrücken, Kontaktstiften und/oder Kontaktklemmen als Gegenkontakte an den Funktionsmodulen ausgebildet sind, wobei unterschiedlichen Niederspannungsleitungen zugeordnete elektrische Kontakte nebeneinander in dem Einsteckfach in Form eines Kontaktblocks angeordnet sind, wobei in dem Einsteckfach zwei Kontaktblöcke mit ihren jeweiligen elektrischen Kontakten einander gegenüberliegend zum Durschleifen von Mehrphasenwechselstromleitungen ausgebildet sind.

Eine der vorliegenden Erfindung zugrunde liegende Idee besteht darin, eine neuartige Steckdose bereitzustellen, bei welcher einerseits die Stromversorgung lediglich eine von vielen möglichen Funktionen darstellt und andererseits die Installations- und die Funktionsebene aus Gründen der elektrischen Sicherheit voneinander getrennt sind, sodass auch Laien, d.h. elektrisch ungeschulte Endkunden, die funktionale Konfiguration der Steckdose durch Austausch des jeweiligen Moduls ohne besondere Kenntnisse vornehmen können. Die vorliegende Erfindung stellt hierbei insbesondere eine Unterputzlösung mit erhöhtem integrierten Berührungsschutz bereit, wodurch sich die Schnittstelle der elektrischen Anlage zum öffentlichen Elektrizitätsversorgungsnetz derart verschiebt, dass das Auswechseln von Unterputz-Steckdosen für die Stromversorgung durch Laien nicht mehr der Errichtungs-, Änderungs- oder Instandsetzungsverordnung unterliegt, da diese Arbeiten aufgrund der hier vorliegenden Lösung quasi automatisch fachlich korrekt und nach den allgemein anerkannten Regeln der Technik beziehungsweise den einschlägigen Normen durchgeführt werden können.

Im Falle gewöhnlicher Unterputz-Steckdosen sind Installation und Funktion normalerweise in einem gemeinsamen Unterputzeinsatz herstellerseitig untrennbar integriert, sodass lediglich eine Einzelmontage möglich ist und damit die gesamte Dose durch eine ausgebildete Fachkraft ausgetauscht werden muss, wenn die Konfiguration der Dose geändert werden soll. So werden beispielsweise in Deutschland jährlich etwa 100 Millionen Steckdosen ausgewechselt, wozu derzeit grundsätzlich eine Elektrofachkraft benötigt wird. Ein großer Anteil von über 90% dieser Installationen ist darauf zurückzuführen, dass im Schnitt alle 15 Jahre eine Wohnung derart renoviert wird, dass deren Bewohner unter anderem ein neues Schalterprogramm erwerben und installieren lassen.

Ein besonderer Vorteil dieser Erfindung ist es nun, dass jeder Nutzer eigenständig Steckdoseneinsätze neu konfigurieren kann, ohne dass es dazu einer Elektrofachkraft bedarf, indem einfach das jeweils eingesteckte Funktionsmodul ausgetauscht wird. Vorliegend benötigt lediglich die Installationsebene, d.h. die Montage des Basisgehäuses, weiterhin eine Elektrofachkraft, wohingegen die Funktionsebene, d.h. die Funktionsmodule, von einem Endanwender genutzt und beliebig abgeändert werden können. Das Basisgehäuse der vorliegenden Multifunktionssteckdose kann hierzu an ihrer Installationsrückseite beispielsweise in einer Unterputz-Einbaudose im Unterputz einer Gebäudewand montiert werden. Anschließend können unterschiedliche Funktionsmodule aus- und eingesteckt werden.

Die berührungsgeschützte Ausführung der Stromkontakteinrichtung im Innern des Einsteckfachs wird dabei für die Trennung von Installations- und Funktionsebene genutzt (vgl. hierzu beispielsweise die Normenreihe DIN VDE 0100). Damit ermöglicht die Erfindung unter anderem Unterputzsteckdoseneinsätze mit erhöhtem, integriertem Berührungsschutz (Kindersicherung, DIN VDE 0620-1), die für die Montage und/oder Demontage keine Fachkraft benötigen.

Es versteht sich für den Fachmann, dass die berührungsgeschützte Ausführung der Stromkontaktvorrichtung allgemein impliziert, dass das Basisgehäuse auch als solches zu der Funktionsvorderseite hin, d.h. insbesondere innerhalb des Einsteckfachs, berührungsgeschützt ausgeführt ist und damit konstruktionsbedingt die elektrische Sicherheit gegen direktes oder indirektes Berühren beim Auswechseln der Funktionsmodule jederzeit wirksam und gewährleistet ist. Daraus folgt unter anderem, dass das Basisgehäuse in dem Einsteckfach im Wesentlichen rückseitig geschlossen ausgebildet ist, d.h. keine Öffnung zu der Stromzugangsvorrichtung und den Niederspannungsleitungen auf der Installationsrückseite vorhanden ist, durch die ein Nutzer hindurchgreifen könnte. Ein Benutzer der Multifunktionssteckdose kann somit beim Wechseln der Funktionsmodule weder absichtlich noch unbeabsichtigt über das Einsteckfach mit dem Niederspannungsnetz in Kontakt kommen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung kann die Stromzugangsvorrichtung mit Schraubklemmen zum Anschließen von Niederspannungsleitungen der Niederspannungsanlage ausgebildet sein.

Die Multifunktionssteckdose kann somit an ihrer Installationsrückseite in der dem Fachmann wohlbekannten Weise an eine Niederspannungsanlage angeschlossen werden, indem die einzelnen Adern der elektrischen Leitungen in die Klemmen eingesteckt und dort festgeschraubt werden. Beispielsweise kann die Stromzugangsvorrichtung eine geeignete Anzahl Schraubklemmen aus einem Metall, einer Metalllegierung und/oder einer metallischen Materialkombination aufweisen, um die Phasen eines Mehrphasenwechselstroms (Drehstrom) zu kontaktieren (z.B. 230V/50Hz), wobei die Schraubklemmen in ein isolierendes Gehäuse eingebettet sein können, z.B. aus einem isolierenden Kunststoff. Es versteht sich hierbei, dass der Fachmann die Schraubklemmen ebenso durch ein entsprechendes geeignetes System von Anschlusselementen ersetzen kann, um der jeweiligen Anwendung und dem jeweiligen System gerecht zu werden.

Insbesondere kann die Stromzugangsvorrichtung mit Schraubklemmen zum Durschleifen von Mehrphasenwechselstromleitungen ausgebildet sein.

Beispielsweise können die in Deutschland standardmäßig verwendeten Niederspannungsleitungen L1 (Phase), N (Neutralleiter) und PE (Schutzleiter) mittels zweimal drei Schraubklemmen durch die Stromzugangsvorrichtung durchgeschleift werden.

Gemäß der Erfindung sind die elektrischen Kontakte der Stromkontaktvorrichtung in dem Einsteckfach als berührungsgeschützte Steck- und/oder Klemmkontakte zur Aufnahme von Kontaktbrücken, Kontaktstiften und/oder Kontaktklemmen als Gegenkontakte an den Funktionsmodulen ausgebildet.

Beispielsweise kann die Stromkontaktvorrichtung zwei auf der Funktionsvorderseite in dem Einsteckfach einander gegenüberliegende Netzklemmen aus isolierendem Kunststoff aufweisen, in welche jeweils drei Klemmkontakte aus einem metallischen Material eingearbeitet sind, in die komplementär geformte Kontaktbrücken oder dergleichen Gegenkontakte der Funktionsmodule einsteckbar sind. Die Klemmkontakte können dabei jeweils durch das Basisgehäuse hindurch mit einer zugehörigen Schraubklemme der Stromzugangsvorrichtung elektrisch gekoppelt sein. In diesem Fall schließen die Kontaktbrücken eines eingesteckten Funktionsmoduls eine Parallelschaltung mit den durchgeschleiften Niederspannungsleitungen.

Ein besonders hervorzuhebender Vorteil ist die Verwendung von Kontaktbrücken (als Gegenkontakte in den Funktionsmodulen), die die zuführenden und abführenden Stromanschlüsse verbinden (z.B. L1, N, PE). Dadurch ist eine nachträgliche Installation der Multifunktionssteckdose denkbar einfach, indem ein vorhandenes Stromkabel zunächst durchtrennt wird und durch die Installation sowie das Einstecken des Funktionsmoduls mit Hilfe der Kontaktbrücken wieder verbunden wird. Smart-Home-Systeme lassen sich dadurch ebenso realisieren, indem beispielsweise durch den Einsatz von elektronischen Relais die Stromleitung auch schaltbar unterbrochen werden kann.

Gemäß der Erfindung sind unterschiedlichen Niederspannungsleitungen zugeordnete elektrische Kontakte nebeneinander in dem Einsteckfach in Form eines Kontaktblocks angeordnet.

Dieser Kontaktblock kann im Inneren des Einsteckfachs in einem ersten Bereich vorgesehen sein. Die Funktionsmodule können entsprechend nebeneinander angeordnete Gegenkontakte aufweisen.

Gemäß der Erfindung sind in dem Einsteckfach zwei Kontaktblöcke mit ihren jeweiligen elektrischen Kontakten einander gegenüberliegend zum Durschleifen von Mehrphasenwechselstromleitungen ausgebildet.

Der zweite Kontaktblock kann im Inneren des Einsteckfachs in einem zweiten Bereich vorgesehen sein, welcher von dem ersten Bereich um eine vorgegebene Distanz beabstandet ist. Die Funktionsmodule können nun mit entsprechenden Kontaktbrücken ausgebildet sein, welche die einander jeweils gegenüberliegenden elektrischen Kontakte der Kontaktblöcke in dem eingesteckten Zustand kontaktieren.

Gemäß einer Weiterbildung können die Stromzugangsvorrichtung und die Stromkontaktvorrichtung einen gemeinsamen Körper aus isolierendem Kunststoff aufweisen.

Der gemeinsame Körper kann dabei in zwei einander gegenüberliegende Teilkörper aufgeteilt sein, welche jeweils von der Installationsrückseite zu der Funktionsvorderseite durch das Basisgehäuse hindurchragen. Beispielsweise können die Teilkörper als einander gegenüberliegende Kunststoff-Netzklemmen ausgebildet sein, welche auf der Installationsrückseite jeweils drei Schraubklemmen aus einem Metallmaterial (oder entsprechende geeignete Kontaktmittel) sowie auf der Funktionsvorderseite die elektrischen Kontakte, z.B. Steck- und/oder Klemmkontakte aus Metall, für die elektrische Anbindung der Funktionsmodule umfassen.

Gemäß einer Weiterbildung kann ein Funktionsmodul vorgesehen sein, welches als Stromkontaktmodul dazu ausgebildet ist, in dem eingesteckten Zustand zur Funktionsvorderseite hin eine Steckdose für die Stromversorgung eines Verbrauchers über die Niederspannungsanlage zu bilden.

Die Multifunktionssteckdose kann somit, falls gewünscht, entsprechend zu einer Unterputzsteckdose verwendet werden, indem ein entsprechendes Stromkontaktmodul in das Einsteckfach des Basisgehäuses eingesteckt wird.

Gemäß einer Weiterbildung kann das Stromkontaktmodul als Schutz-Kontakt-Steckdose ausgebildet sein.

Das Stromkontaktmodul kann somit entsprechend zu einem festgelegten Stecksystem oder Standard für Steckverbinder ausgebildet sein, insbesondere als Schuko-Modul für den europäischen bzw. deutschen Raum.

Gemäß einer Weiterbildung können mehrere Stromkontaktmodule gemäß unterschiedlichen länderspezifischen Normen unterschiedlicher Staaten vorgesehen sein.

Damit wird durch die vorliegende Erfindung eine länderübergreifende Lösung für die (unterputzinstallierte) Haushaltssteckdose geboten. Durch Auswechseln der jeweiligen Stecker-Typen kann jeder Laie gefahrlos beispielsweise aus einer deutschen Schuko-Steckdose (Typ F) eine französische oder polnische Steckdose (TYP E) machen. Es versteht sich, dass hierbei sämtliche relevanten Ländervarianten in Frage kommen können, z.B. USA (A und B), Eurostecker (C), Indien (D), Frankreich und Polen (E), Deutschland (F), UK (G), Israel (H), Australien und China (I), Schweiz und Liechtenstein (J), Dänemark und Grönland (K), Italien (L), Südafrika, Swasiland und Lesotho (M), Brasilien (N) usw. Aufgrund der vorliegenden Erfindung lassen sich alle diese Ländervarianten von einem Laien gefahrlos trotz elektrisch installierter und aktiver Basisdose montieren.

Allgemein gesehen ermöglicht es die Erfindung damit, den Unterputzsteckdosen-Aufbau eines Gebäudes nachträglich von einer Ländervariante auf eine andere Ländervariante umzustellen, ohne dass die eigentliche Unterputzdose, d.h. das Basisgehäuse, auszutauschen ist. Vielmehr müssen lediglich die Funktionsmodule entsprechend ausgewechselt werden, was ohne weiteres auch jederzeit nachträglich und ohne besondere Kenntnisse möglich bleibt.

Gemäß einer Weiterbildung kann das Stromkontaktmodul als Schalt- und/oder Dimm-Aktor ausgebildet sein.

Damit kann das Funktionsmodul insbesondere die zuführenden und/oder abführenden Stromanschlüsse (wie beispielsweise L1, N, PE) trennbar schalten und/oder dimmen.

Gemäß einer Weiterbildung kann ein Funktionsmodul vorgesehen sein, welches als Netzwerkkontaktmodul dazu ausgebildet ist, in dem eingesteckten Zustand Übertragungsdaten auf die Niederspannungsleitungen der Niederspannungsanlage zu modulieren und/oder von den Niederspannungsleitungen zu demodulieren.

Neben Stromkontaktmodulen, insbesondere zum Ersatz gewöhnlicher Strom-Steckdosen, sind somit auch Module mit anderen Funktionen vorgesehen. In dieser beispielhaften Weiterbildung wird ein auswechselbares Applikationsmodul bereitgestellt, welches Daten auf Gebäudeinstallations-Niederspannungsleitungen modulieren bzw. entsprechend Daten von diesen demodulieren kann und dadurch beispielsweise zur Erzeugung von nachrüstbaren Multimedia-Inhausnetzen im Wohnungsgebäudebestand geeignet ist.

In dieser konkreten Weiterbildung setzt das Funktionsmodul somit eine Powerline-Kommunikation um (auch PowerLAN genannt), bei welcher bereits aus anderen Gründen vorhandene elektrische Leitungen im Niederspannungsnetz zum Aufbau eines lokalen Netzwerks zur Datenübertragung genutzt werden, ohne dass eine zusätzliche Verkabelung notwendig ist. Im Unterschied zu bekannten Powerline-Steckdosenadaptern, welche in gewöhnliche Schuko-Steckdosen eingesetzt werden müssen, wird vorliegend eine modular einsteckbare und ästhetisch ansprechende Unterputzlösung bereitgestellt. Aufgrund der Unterputzinstallation kann die vorliegende Lösung mit deutlich kleinerem Bauraum bzw. Installationsraum als herkömmliche Powerline-Adapter umgesetzt werden.

Gemäß einer Weiterbildung kann eine Netzwerkzugangsvorrichtung an dem Basisgehäuse zum Anschluss der Multifunktionssteckdose an ein Datennetzwerk über die Installationsrückseite ausgebildet sein. Entsprechend kann ein Funktionsmodul vorgesehen sein, welches als Netzwerkkontaktmodul dazu ausgebildet sein kann, die Netzwerkzugangsvorrichtung in dem eingesteckten Zustand zu kontaktieren und über die Netzwerkzugangsvorrichtung eine datentechnische Anbindung an das Datennetzwerk bereitzustellen.

Netzwerkkontaktmodule im Sinne der Erfindung können somit nicht nur in Analogie zu Powerline-Adaptern ausgebildet werden, sondern darüber hinaus ebenso zur Ankopplung an gewöhnliche Datennetzwerke ausgebildet sein. Es kann somit in besonders vorteilhafter Weise eine funktionale Kopplung zwischen einer Gebäude-Stromversorgung und Gebäude-Datennetzwerken erreicht werden (z.B. zwischen einer Niederspannungsanlage und Multimedia-Inhausnetzen, Heimautomatisierungsnetzwerken oder anderen Heimnetzwerken bzw. allgemeinen Gebäudenetzwerken), ohne dass auf die bestehenden Errungenschaften der Netzwerktechnik verzichtet werden muss (z.B. auf Basis heutiger Antennen-/Koaxialkabel wie KOAX A++, Netzwerkkabel wie KAT7 oder auch Glasfaserkabeln bzw. optischen Leitungen).

Anders ausgedrückt kann vorliegend ein einziger Unterputz-Grundkörper als Basis für sämtliche Steckdosenvarianten eingesetzt werden, die im Zusammenhang mit einer Gebäudeinstallation in Frage kommen, einschließlich Stromsteckdosen, Netzwerksteckdosen, Glasfaseranschlüssen, Powerline-Adaptern, drahtlose Datenschnittstellen usw. Um eine bestimmte Funktion umzusetzen, muss lediglich ein entsprechend ausgebildetes Funktionsmodul in das jeweilige Basisgehäuse eingesteckt werden. Aufgrund des gewählten Steckansatzes kann die Auswahl nachträglich jederzeit wieder geändert werden, ohne dass die eigentliche Unterputzinstallation angetastet werden müsste (wozu ein Elektrofachmann hinzuzuziehen wäre).

Gemäß einer Weiterbildung kann die Netzwerkzugangsvorrichtung mit einem Datenanschluss zum Anschließen zumindest eines Datenkabels über die Installationsrückseite ausgebildet sein.

Die Multifunktionssteckdose kann in dieser Weiterbildung also nicht nur über die Installationsrückseite an Niederspannungsleitungen, sondern darüber hinaus an unterschiedliche Datenleitungen von Datennetzwerken angeschlossen werden, wie beispielsweise an ein Ethernet-Netzwerk etc. Beispielsweise kann eine LSA-Steckleiste mit mehreren Schneidklemmkontakten zum Anschluss eines Ethernet-Kabels verwendet werden. Die Netzwerkzugangsvorrichtung kann prinzipiell entsprechende (Steck-) Anschlüsse innerhalb des Einsteckfachs bereitstellen, an welche dann zugehörige Gegenanschlüsse des jeweiligen Funktionsmoduls angekoppelt werden, wenn dieses in das Einsteckfach eingesteckt wird. Alternativ oder zusätzlich können jedoch ebenso bereits für die Stromkontaktierung vorhandene Steck- und/oder Klemmkontakte verwendet werden, um auch die Netzwerkdaten über diese Kontakte an das Funktionsmodul zu übertragen.

Gemäß einer Weiterbildung kann das zumindest eine Datenkabel ein Netzwerkkabel, ein Koaxialkabel und/oder ein Glasfaserkabel umfassen.

Gemäß einer Weiterbildung kann die Netzwerkzugangsvorrichtung eine Netzwerkkabel-Verbindungsleiste mit einer Vielzahl von Schneidklemmkontakten zur Kontaktierung eines Netzwerkkabels aufweisen.

Diese elektrischen Schneidklemmkontakte sind dazu ausgebildet, an ein jeweiliges Datenkabel elektrisch und mechanisch anzukoppeln (z.B. an herkömmliche Kupferkabel). Dies ermöglicht eine sehr einfache Verbindung der einzelnen Kontakte mit den jeweiligen Netzwerkanschlüssen. Dabei werden die Kabel für die Netzwerkanschlüsse bzw. andere Kabel direkt bis zu den Schneidklemmkontakten geführt und direkt mit diesen verklemmt. Dies ermöglicht eine besonders einfache und schnelle Kontaktierung.

Prinzipiell lassen sich Schneidklemmkontakte auch zur Ankopplung eines Koaxialkabels verwenden. Alternativ können hierzu jedoch auch andere Verbindungstechniken, beispielsweise Federhülsen und/oder Kontaktfähnchen, verwendet werden.

Gemäß einer Weiterbildung kann die Netzwerkzugangsvorrichtung mit einem Glasfaservorratsraum zur Aufnahme, Bevorratung und/oder Kontaktierung eines Glasfaserkabels ausgebildet sein.

Bei Heimnetzwerken innerhalb von Wohnungen oder Wohnhäusern ist in der Regel keine optische Signalübertragung, die auf (echten) Glasfasern basiert, vorhanden, was u.a. daran liegt, dass bei elektrischen Geräten und Systemen in Gebäuden derzeit keine auf Glasfasern basierende optische Signalübertragung eingesetzt wird. Allerdings ist die Glasfasertechnologie unbestritten eine Kommunikationstechnologie der Zukunft.

Bei einem Glasfasernetz handelt es sich um ein Übertragungsmedium zur Datenkommunikation in Form einer Verbindung mehrerer Glasfaserkabel zu einem Netzwerk. Bislang sind derartige Glasfasernetze jedoch in den meisten Fällen nicht bis zum Verbraucher, also zu Privatkunden und Firmen, gelegt worden, sondern bilden quasi ein so genanntes Backbone-Kommunikationsnetz. Die so genannte letzte Meile besteht überwiegend noch aus Kupfer-Mehrdrahtleitungen oder Koaxialkabeln, so dass beim Übergang von einem Glasfaserkabel in eine Kupferleitung das ankommende optische Signal in den entsprechenden Verteilerkästen in ein elektrisches Signal transformiert wird, welches dann in die jeweiligen Wohnungen geführt wird. In den jeweiligen Wohnungen erfolgt dann die Datenkommunikation traditionell drahtgebunden. Allerdings existieren im Zuge des erhöhten Bandbreitenbedarfs Bestrebungen, dieses Ende der optischen Übertragung immer näher zum Endverbraucher zu verlegen, sodass zukünftig damit zu rechnen ist.

Auch wenn aktuell die optische Signalübertragung innerhalb Wohnungen und Wohnhäusern noch praktisch keine Verwendung findet, ist es eine Erkenntnis der vorliegenden Weiterbildung, dass Baumaßnahmen, sei es Neubauten oder Renovierung von Bestandsobjekten, stets auf sehr lange Sicht hin konzipiert werden. Bei derartigen Baumaßnahmen ist es vorteilhaft, wenn nicht nur der aktuell bekannte technologische Standard eingebaut wird, sondern dass ein zukünftiger Technologiestandard berücksichtigt wird, sofern dieser bereits absehbar ist, so dass die Baumaßnahme auch zukünftig als modern bezeichnet werden kann.

Die Idee der vorliegenden Weiterbildung besteht nun darin, bei der Konzeption von modernen Heimnetzwerken mit passivem Verkabelungssystemen, die verwendeten Anschlussdosen bereits auf einen technologischen Standard vorzubereiten, der die optische Signalübertragung unterstützt. Dies wird in der vorliegenden Weiterbildung dadurch realisiert, dass die entsprechenden modular aufgebauten Multifunktionssteckdosen bereits mit einer Glasfaseranschlussmöglichkeit oder sogar mit einem derartigen Kabel ausgestattet werden.

Die entsprechende Multifunktionssteckdose kann so sehr einfach zu einem späteren Zeitpunkt mit einem optischen Glasfaseranschluss erweitert werden. Für die funktionale Erweiterung, das heißt für das Hinzufügen eines Glasfaseranschlusses, müsste lediglich ein entsprechendes Funktionsmodul eingesetzt werden, welche einen entsprechenden Glasfaseranschluss aufweist. Dieser Glasfaseranschluss lässt sich auf sehr einfache Weise mit einem an die Multifunktionssteckdose angeschlossenen oder in dieser bevorrateten Glasfaserkabel verbinden. Alternativ könnten die optischen Signale innerhalb der Multifunktionssteckdose in elektrische Signale umgewandelt werden und derart an das jeweilige Funktionsmodul weitergegeben werden.

Der besondere Vorteil besteht darin, dass es für diese funktionale Erweiterung nicht notwendig ist, dass die im bestimmungsgemäßen Gebrauch in oder an der Wand installierte Multifunktionssteckdosen deinstalliert und gegebenenfalls sogar ausgetauscht werden müsste. Hinzu kommt, dass bei einem nachträglichen Herausnehmen von Multifunktionssteckdosen die handwerkliche Gewährleistung der Elektroinstallation gefährdet sein könnte, was mit der vorliegenden Weiterbildung sehr elegant umgangen werden kann.

Eine weitere Erkenntnis besteht darin, dass ein nachträgliches Erweitern oder Ergänzen eines bestehenden Kommunikationssystems mit einer zusätzlichen Funktionalität einen um ein Mehrfaches höheren Aufwand und damit um ein Mehrfaches höhere Kosten nach sich zieht, als wenn diese Maßnahme bereits bei der Installation und beim Einbau berücksichtigt worden wäre. Diesem Umstand trägt die vorliegende Weiterbildung Rechnung und ermöglicht somit die entsprechende einfache, kostengünstige Erweiterbarkeit auf die Glasfasertechnologie durch Bereitstellen der entsprechenden Glasfasertechnologie in einer Multifunktionssteckdose.

Beispielsweise kann innerhalb des Glasfaservorratsraums eine Spule vorhanden sein, auf welche ein Glasfaserkabel platzoptimiert aufgerollt werden kann. Diese Spule fungiert somit als eine Art Glasfaserkabelspeicher. Darüber hinaus verhindert die aufgerollte Speicherung, dass das Glasfaserkabel knicken und möglicherweise dadurch seine Funktion verlieren kann. Auch wird vermieden, dass das Glasfaserkabel im Inneren des Gehäuses eine ungünstige Position für den Zeitraum der Bevorratung einnehmen kann bzw. unkontrolliert und ggfs. in störender Weise im Inneren des Gehäuses herumliegen würde.

Beispielsweise kann der Glasfaservorratsraum ein schlankes, wenige Millimeter dickes, z.B. 2-faseriges, biegeunempfindliches, Glasfaserkabel aufnehmen, wie beispielsweise einen Single Mode E9/125 Lichtwellenleiter. Damit wird sichergestellt, dass das Glasfaserkabel unter den engen Verlege- und Anschlussbedingungen innerhalb des vorhandenen Bauraums problemlos bevorratet werden kann, ohne dass dessen Funktionalität beschädigt wird. Bei dem E9/125 Lichtwellenleiter handelt es sich um einen hochqualitativen Lichtwellenleiter, der vorzugsweise halogenfrei und flammwidrig ist und durch Kevlar mit Aramidfasern eine hohe Zugfestigkeit aufweist. Der Kabelmantel kann zum Beispiel aus halogenfreiem, raucharmen und flammwidrigem Material bestehen. Der Aderaufbau kann zum Beispiel ein Duplexkabel I-VH oder ein Rundkabel I-FH sein. Derartige Kabel können mit hochwertigen Steckern mit Keramikferrule konfektioniert sein.

Gemäß einer Weiterbildung kann das Netzwerkkontaktmodul als Netzwerksteckdose, Datenschnittstelle für ein kabelloses Datennetzwerk, Übertragungsmodul für Internetradio und/oder Digitalradio und/oder Gebäudekommunikationsmodul ausgebildet sein.

Beispielsweise kann das Netzwerkkontaktmodul dazu ausgebildet sein, Übertragungsdaten auf die Niederspannungsleitungen der Niederspannungsanlage zu modulieren (d.h. als Powerline-Modul ausgebildet sein). Je nach Ausgestaltung kann das Netzwerckontaktmodul dann beispielsweise eine Netzwerksteckdose (Ethernet/LAN, z.B. als 8-polige RJ45 Anschlussbuchse) und/oder einen drahtlosen Zugangspunkt ("Wireless Access Point") bzw. eine drahtlose Schnittstelle für ein drahtloses Netzwerk bereitstellen (z.B. als WLAN-Touch-Modul, welches durch einfaches Antippen ein Einschalten und Ausschalten des Zugangspunktes und/oder eine Anpassung der Sendeleistung je nach Bedarf ermöglicht). In anderen Ausgestaltungen können gleichermaßen beispielsweise IP-Radio oder eine IP-Türkommunikations-Video-Wohnungsstation oder ähnliches realisiert werden.

Eine herkömmliche Niederspannungs-Gebäude-Installation kann somit zukunftsfähig und in Unterputz-Form zu einem Heimnetzwerk aufgerüstet werden, sowohl im Gebäudebestand als auch im Neubau. Aus optischer Sicher lässt sich das vorliegende System zu praktisch jedem Rahmenprogramm beliebiger Schalterrahmenhersteller fügen. Daher ist die vorliegende Lösung insbesondere für den Bestandsbau vorteilhaft, da anstelle einer beliebigen Steckdose jedes Herstellers die vorliegende Multifunktionssteckdose zum Einsatz kommen kann, welche ein Heim-Niederspannungsnetz unauffällig sofort oder zu einem späteren Zeitpunkt zum Datentransfer aufrüsten kann. Durch den Einsatz der standardisierten g.hn-Protokolltechnologie kann dabei eine digitale Kompatibilität mit den Produkten aller derjenigen Hersteller gewährleistet werden, die ebenfalls diesen Protokollstandard verwenden.

Ebenso kann das Netzwerkkontaktmodul dazu ausgebildet sein, auf ein über die Netzwerkzugangseinrichtung in die Multifunktionssteckdose eingekoppeltes Netzwerkkabel zuzugreifen (z.B. ein Kat 7 Kabel). Genau wie in dem obigen Beispiel kann das Netzwerkkontaktmodul auch in diesem Fall beispielsweise als Netzwerksteckdose und/oder drahtlose Schnittstelle ausgebildet sein.

Gemäß einer Weiterbildung kann das Netzwerkkontaktmodul als Medienkonverter dazu ausgebildet sein, zwischen Lichtwellensignalen und elektrischen Signalen zu konvertieren. Bei den elektrischen Signalen kann es sich insbesondere um CATV-Signale, LAN-Signale und/oder WLAN-Signale handeln.

Im Falle, dass das Netzwerkkontaktmodul über die Netzwerkzugangsvorrichtung an ein Glasfasernetzwerk angeschlossen ist, kann ein integrierter Medienkonverter Lichtwellenleitersignale in CATV-Signale ("Fiber to CATV"), LAN-Signale ("Fiber to LAN") und/oder WLAN-Signale ("Fiber to WLAN") umwandeln, um das Heimnetzwerk somit in flexibler Weise an ein Glasfasernetzwerk anzuschließen.

Gemäß einer Weiterbildung kann die Stromzugangsvorrichtung und/oder die Netzwerkzugangsvorrichtung in einem durch einen abnehmbaren Deckel abgeschlossenen Vorratsraum auf der Installationsrückseite des Basisgehäuses ausgebildet sein.

Der Deckel kann beispielsweise aus Kunststoff bestehen und zur Abdeckung der Stromzugangsvorrichtung und/oder die Netzwerkzugangsvorrichtung auf der Installationsrückseite des Basisgehäuses dienen. Gleichzeitig kann der Deckel Durchführungen und Berührungsschutz für die Niederspannungsleitungen und weiteren Kabel aufweisen (wie Netzwerkkabel, Glasfaserkabel, Koaxialkabel usw.).

Gemäß einer Weiterbildung kann der abnehmbare Deckel eine Durchführung und/oder einen vorperforierten Durchbruch für das zumindest eine Datenkabel und/oder für die Niederspannungsleitungen der Niederspannungsanlage aufweisen.

Neben einfachen Durchführungen können somit ergänzend oder alternativ entfernbare Durchbruchbereiche vorgesehen sein, die anwendungsbezogen aufgebrochen werden können, um die entsprechenden Kabel durchzuführen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Perspektivansicht einer Multifunktionssteckdose mit einem eingesteckten Funktionsmodul von schräg vorne gemäß einer Ausführungsform der Erfindung;
- Fig. 2: eine schematische Perspektivansicht eines Basisgehäuses der Multifunktionssteckdose aus Fig. 1;
- Fig. 3: eine schematische Perspektivansicht des Funktionsmoduls der Multifunktionssteckdose aus Fig. 1;
- Fig. 4: eine schematische Perspektivansicht der Multifunktionssteckdose aus Fig. 1 mit einem anderen eingesteckten Funktionsmodul;
- Fig. 5: eine schematische Perspektivansicht des Funktionsmoduls der Multifunktionssteckdose aus Fig. 4;
- Fig. 6: eine weitere Perspektivansicht des Funktionsmoduls der Multifunktionssteckdose aus Fig. 4;
- Fig. 7: eine schematische Perspektivansicht der Multifunktionssteckdose aus Fig. 1 mit einem anderen eingesteckten Funktionsmodul;
- Fig. 8: eine schematische Perspektivansicht des Funktionsmoduls der Multifunktionssteckdose aus Fig. 7;
- Fig. 9: eine weitere Perspektivansicht des Funktionsmoduls der Multifunktionssteckdose aus Fig. 7;
- Fig. 10: eine schematische Perspektivansicht der Multifunktionssteckdose aus Fig. 1 von schräg hinten;
- Fig. 11: eine schematische Perspektivansicht der Multifunktionssteckdose aus Fig. 1 von schräg hinten in geöffnetem Zustand;
- Fig. 12: eine schematische Seitenansicht der Multifunktionssteckdose aus Fig. 11 ohne Frontrahmen;
- Fig. 13: eine schematische Vorderansicht der Multifunktionssteckdose aus Fig. 1 ohne Funktionsmodul;
- Fig. 14: eine schematische Perspektivansicht der Multifunktionssteckdose aus Fig. 1 entsprechend der Ansicht in Fig. 13 von schräg vorne;
- Fig. 15: eine weitere schematische Perspektivansicht des Funktionsmoduls aus Fig. 3 von schräg vorne;
- Fig. 16: eine schematische Rückansicht des Funktionsmoduls aus Fig. 15;
- Fig. 17: eine schematische Perspektivansicht des Funktionsmoduls aus Fig. 15 ohne Moduldeckel und Blende und mit sichtbarer Kindersicherung;
- Fig. 18: eine schematische Perspektivansicht des Funktionsmoduls aus Fig. 17 ohne Kindersicherung;
- Fig. 19: eine schematische Vorderansicht elektrischer Kontakte des Funktionsmoduls aus Fig. 18;
- Fig. 20: eine schematische Perspektivansicht des Funktionsmoduls aus Fig. 15 von hinten und ohne Einstecksockel;
- Fig. 21: eine schematische Vorderansicht einer Multifunktionssteckdose ohne Funktionsmodul gemäß einer weiteren Ausführungsform;
- Fig. 22: eine schematische Perspektivansicht einer Multifunktionssteckdose von hinten gemäß einer weiteren Ausführungsform; und
- Fig. 23: eine schematische Perspektivansicht der Multifunktionssteckdose aus Fig. 22 ohne Deckel.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

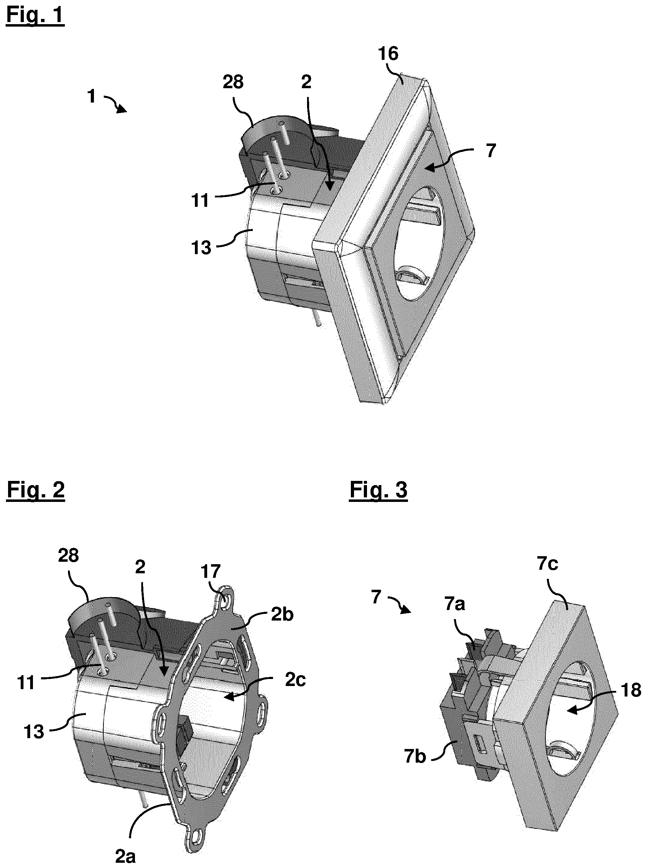

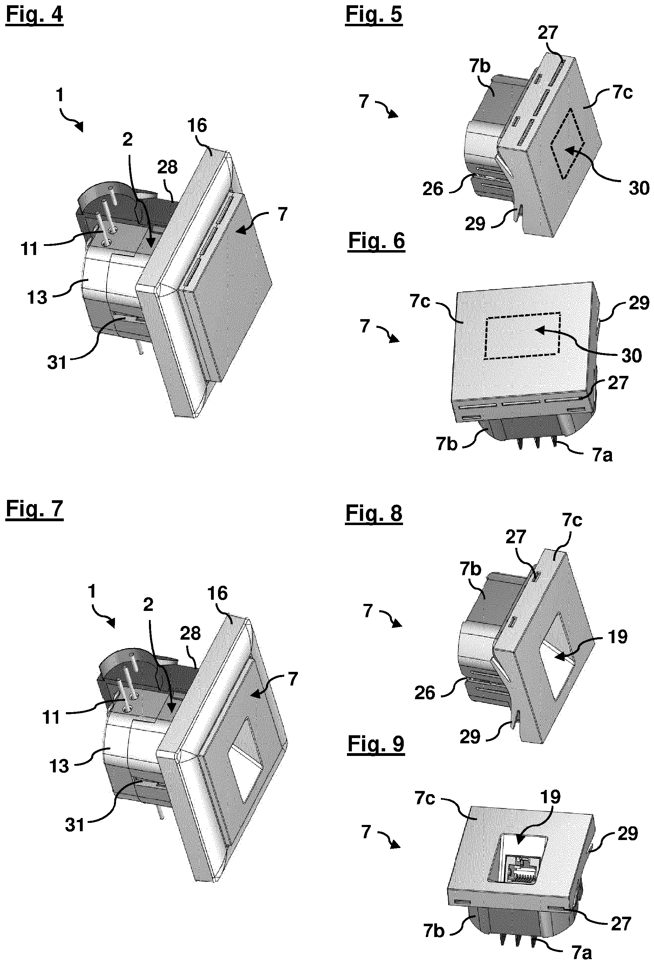

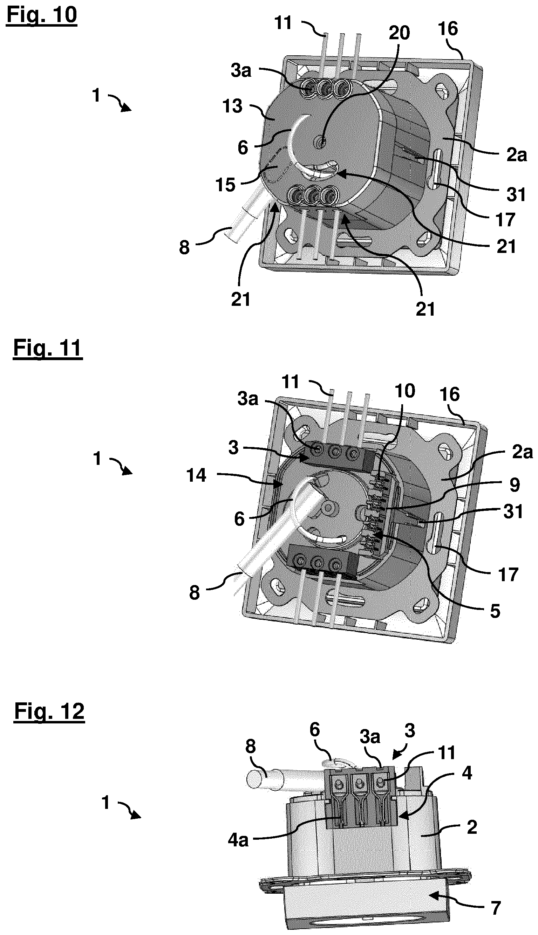

Figur 1 zeigt eine schematische Perspektivansicht einer Multifunktionssteckdose 1 mit einem Basisgehäuse 2 und einem darin eingesteckten Funktionsmodul 7 von schräg vorne gemäß einer Ausführungsform der Erfindung. Das Basisgehäuse 2 ist ebenfalls in Fig. 2 zu sehen, während Fig. 3 das Funktionsmodul 7 in einer Einzelansicht zeigt. Weitere Ansichten der Multifunktionssteckdose 1, des Basisgehäuses 2 und dieses Funktionsmoduls 7 sind in Fig. 10 ff. zu sehen. Fig. 4 bis 9 zeigen weitere Funktionsmodule 7, wie sie ebenfalls für die Multifunktionssteckdose 1 verwendbar sind.

Die Multifunktionssteckdose 1 ist als Unterputzsteckdose ausgebildet, bei der im montierten Zustand der größte Bereich der Steckdose und insbesondere das Basisgehäuse 2 in einer eigens dafür vorgesehenen Ausnehmung innerhalb einer Wand platziert wird und bestenfalls ein geringer Teil des eingesteckten Funktionsmoduls 7 und ggf. ein dieses umgebender Frontrahmen 16 von der Wand absteht.

Das Basisgehäuse 2 umfasst mehrere Befestigungsschnittstellen 17, über welche das Basisgehäuse 2 und damit die Multifunktionssteckdose 1 in einer genormten Unterputzdose 28 oder dergleichen in einer Wand befestigt werden kann, beispielsweise durch entsprechende Schrauben. Sobald das Basisgehäuse 2 montiert ist, können der Frontrahmen 16 und das Funktionsmodul 7 eingesteckt werden, wobei der Frontrahmen 16 zwischen dem Basisgehäuse 2 und dem Funktionsmodul 7 gehalten werden kann.

Die Multifunktionssteckdose 1 soll die Applikationsvielfalt fest installierter Unterputz-Steckdosen erweitern, indem sie das berührungsgeschützte Auswechseln unterschiedlicher Funktionsmodule 7 für den Nutzer auch ohne besondere Kenntnisse auf dem Gebiet der Elektroinstallation ermöglicht. Für gewöhnlich werden Unterputzsteckdosen als integrierte und fest zusammengebaute Bauteile bereitgestellt, die von einer Elektrofachkraft zu (de-) montieren sind. Um die Funktion und/oder Konfiguration einer solchen gewöhnlichen Unterputzsteckdose zu ändern, bleibt dem Nutzer normalerweise nichts anderes übrig, als die Steckdose vollständig auszutauschen. Alternativ sind Steckadapter für unterschiedliche Anwendungen im Handel erhältlich, welche in eine normale vorkonfektionierte Unterputz-Stromsteckdose (z.B. Schuko) einsteckbar sind. Konstruktionsbedingt stehen derartige Adapter dann jedoch mehr oder weniger deutlich von der Wand hervor und sind zudem in ihren funktionellen Möglichkeiten sehr stark durch die entsprechende Ausbildung der jeweiligen Unterputzsteckdose eingeschränkt. Die vorliegende modulare Unterputzlösung bietet nun die Möglichkeit, die Konfiguration eines Unterputzaufbaus jederzeit zu ändern, ohne Kompromisse bei der elektrischen Sicherheit eingehen zu müssen. Hierzu ist ein eingestecktes Funktionsmodul 7 einfach durch ein anderes Funktionsmodul 7 zu ersetzen. Da die Funktionsmodule 7 hierbei Bestandteil der Unterputzinstallation sind, können diese entsprechend platzsparend mit verkleinertem Bauraum gegenüber herkömmlichen Adapterlösungen ausgeführt werden.

Konkret ist das Basisgehäuse 2 zu dem obigen Zweck mit einer Installationsrückseite 2a zur Unterputzinstallation der Multifunktionssteckdose 1 und mit einer Funktionsvorderseite 2b mit einem darin eingearbeiteten Einsteckfach 2c zur Aufnahme von auswechselbaren Funktionsmodulen 7 zur Bereitstellung von unterschiedlichen Nutzerfunktionen ausgebildet. So ist das Funktionsmodul der Fig. 1, 3 und 15 ff. als Schutz-Kontakt-Steckdose ausgebildet, in welche ein externer Verbraucher eingesteckt und mit elektrischer Leistung von der Niederspannungsanlage versorgt werden kann.

Das Basisgehäuse 2 kann beispielsweise mittels Aluminiumdruckguss oder dergleichen gefertigt sein, um Wärmeleistung des eingesteckten Funktionsmoduls 7 möglichst effizient abführen zu können. Eine mittige Gewindebohrung 20 kann einerseits der Verschraubung eines Deckels 13 des Basisgehäuses auf der Installationsrückseite 2a und andererseits gleichzeitig, falls gewünscht, einer Schraubbefestigung des Funktionsmoduls 7 auf der Funktionsvorderseite 2b dienen.

Der rückseitige Deckel 13 deckt hierbei einen Vorratsraum 14 auf der Installationsrückseite 2a des Basisgehäuses 2 ab, in welchem in der dargestellten Ausführung eine Stromzugangsvorrichtung 3 und eine Netzwerkzugangsvorrichtung 5 ausgebildet sind. Die Stromzugangsvorrichtung 3 dient dabei dazu, die Multifunktionssteckdose 1 auf der Installationsrückseite 2a elektrisch an Niederspannungsleitungen 11 einer Niederspannungsanlage anzuschließen. Die Netzwerkzugangsvorrichtung 5 andererseits ist mit einem Datenanschluss zum Anschließen und Fixieren zumindest eines Netzwerkkabels 8 und eines Glasfaserkabels 6 über die Installationsrückseite 2a ausgebildet, um die Multifunktionssteckdose 1 an ein Datennetzwerk bzw. ein Glasfasernetzwerk anzukoppeln.

Der abnehmbare Deckel 13 kann beispielsweise aus Kunststoff gefertigt sein. In der gezeigten Variante umfasst der Deckel 13 mehrere Durchführungen 21 (vgl. Fig. 10) für die Niederspannungsleitungen 11 sowie für das Netzwerkkabel 8 und das Glasfaserkabel 6. Es versteht sich hierbei jedoch, dass der Deckel 13 alternativ oder zusätzlich auch lediglich vorperforierte Durchbrüche 15, insbesondere für Datenkabel wie beispielsweise ein Netzwerkkabel, ein Koaxialkabel und/oder ein Glasfaserkabel, aufweisen kann, welche sich von einem Nutzer nachträglich je nach Bedarf öffnen lassen, um ein entsprechendes Kabel durchzuführen. Beispielhaft hierzu ist in Fig. 10 ein derartiger Durchbruch 15 für das Netzwerkkabel 8 eingezeichnet.

Die Stromzugangsvorrichtung 3 auf der Installationsrückseite 2a des Basisgehäuses 2 ist durch das Basisgehäuse 2 hindurch elektrisch mit einer Stromkontaktvorrichtung 4 gekoppelt. Die Stromkontaktvorrichtung 4 ist auf der Funktionsvorderseite 2b in dem Einsteckfach 2c elektrisch berührungsgeschützt mit elektrischen Kontakten 4a zur Kontaktierung entsprechender elektrischer Gegenkontakte 7a des in das Einsteckfach 2c eingesteckten Funktionsmoduls 7 ausgebildet, um dieses über die Niederspannungsanlage mit elektrischer Leistung zu versorgen.

In der gezeigten beispielhaften Ausführung sind die Stromzugangsvorrichtung 3 und die Stromkontaktvorrichtung 4 gemeinsam als Kontaktblöcke aus isolierendem Kunststoff gefertigt, wobei zwei einander gegenüberliegende Kontaktblöcke jeweils drei berührungsgeschützte Klemmkontakte aus Metall innerhalb des Einsteckfachs 2c als elektrische Kontakte 4a zur Kontaktierung des Funktionsmoduls 7 sowie drei Schraubklemmen 3a aus Metall innerhalb des Vorratsraums 14 zum Durschleifen der Niederspannungsleitungen 11 der Niederspannungsanlage umfassen. Die Niederspannungsleitungen 11 können dabei insbesondere Mehrphasenwechselstromleitungen sein, d.h. beispielsweise L1, N und PE. Die Niederspannungsleitungen 11 sind somit wie üblich von einer Elektrofachkraft im Zug einer Unterputzinstallation des Basisgehäuses 2 zu kontaktieren. Andererseits kann der elektrische Kontakt mit den Funktionsmodulen 7 durch simples Einstecken der Module erreicht werden, wobei die elektrische Sicherheit aufgrund der berührungsgeschützten Ausbildung der elektrischen Kontakte 4a jederzeit gewahrt ist.

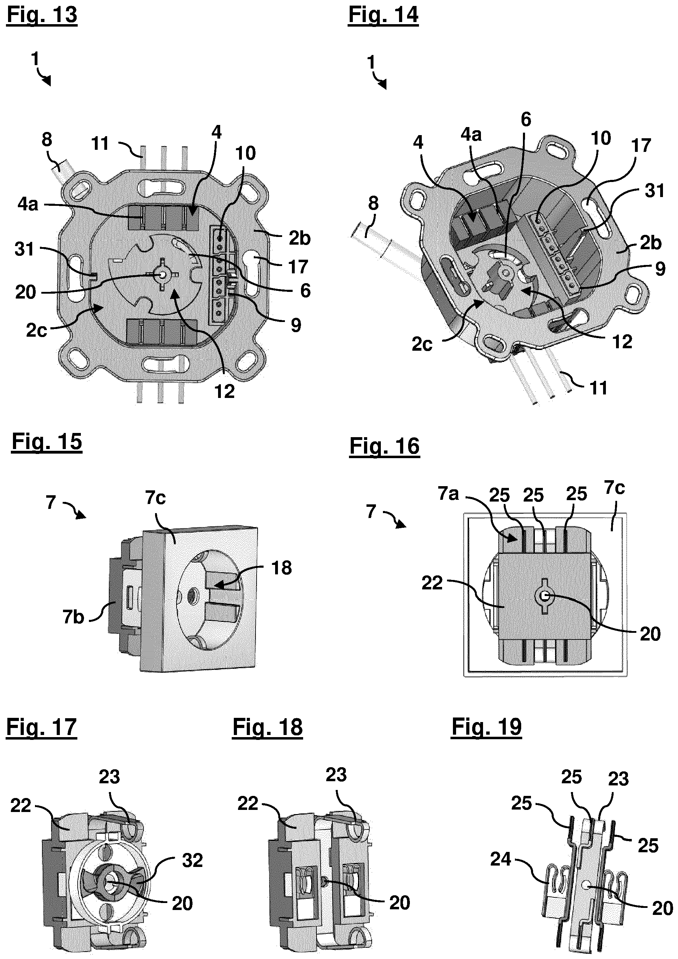

In den gezeigten Ausführungen sind die elektrischen Kontakte 4a der Stromkontaktvorrichtung 4 - wie bereits oben erwähnt - als Klemmkontakte ausgebildet, wobei jeweils drei solcher Kontakte in einem Kontaktblock nebeneinanderliegen (z.B. jeweils für die Anschlüsse L1, N und PE). Diese Ausführung bietet die vorteilhafte Möglichkeit, Kontaktbrücken 25 als Gegenkontakte 7a in dem Funktionsmodul 7 zu verwenden (vgl. Fig. 16 und 18), um die zuführenden und abführenden Stromanschlüsse (L1, N, PE) auf beiden Seiten des Einsteckfachs 2c zu verbinden. Aufgrund der isolierten Ausbildung der Stromkontaktvorrichtung 4, d.h. insbesondere der Kontaktblöcke, sowie des Einsteckfachs 2c ist die elektrische Sicherheit gewährleistet. Das Funktionsmodul 7 kann somit auch durch Nutzer ohne besondere Kenntnisse ein- und ausgesteckt werden.

Dieses als Stromsteckdose 18 ausgebildete Funktionsmodul 7 ist in Fig. 15 ff. im Detail dargestellt. Das Funktionsmodul 7 kann über einen Einstecksockel 7b in das Einsteckfach 2c des Basisgehäuses 2 eingesteckt werden. In dem eingesteckten Zustand steht lediglich noch ein Moduldeckel mit der Stromsteckdose 18 über den Wandverputz über. Wie bereits erwähnt kann die Stromsteckdose 18 als Schuko-Stecksteckdose mit den entsprechenden Schutzkontakten ausgebildet sein.

Wie in Fig. 17 ff. zu sehen ist, umfasst das Funktionsmodul 7 neben dem isolierenden Moduldeckel 7c aus Kunststoff (sowie Blende mit Befestigungsschraube 35 und Kindersicherung 32) einen isolierenden Kontaktträger 22, z.B. ebenfalls aus Kunststoff, an dem der übliche Erdungskontakt 23 samt Feder als weiterer Berührungsschutz sowie zwei Kontaktklammern 24 für die Kontaktierung der entsprechenden Gegenkontakte (Stifte) eines Schuko-Steckers angebracht sind. Die Kontaktklammern 24 sind jeweils mit einer Kontaktbrücke 25 zur Kontaktierung des jeweils zugehörigen Klemmkontakts 4a der Stromkontaktvorrichtung 4 elektrisch gekoppelt. Der Erdungskontakt 23 ist dabei als dritte, zentrale Kontaktbrücke 25 ausgebildet (vgl. Fig. 16 und 19).

Die in Fig. 17 abgebildete, drehbar ausgebildete Kindersicherung 32 kann beispielsweise farbig, z.B. magentafarben, ausgebildet sein, sodass auch mit angebrachtem Deckel 7c das Vorhandensein der Kindersicherung 32 durch die Stecköffnungen der Steckdose 18 hindurch deutlich erkennbar ist.

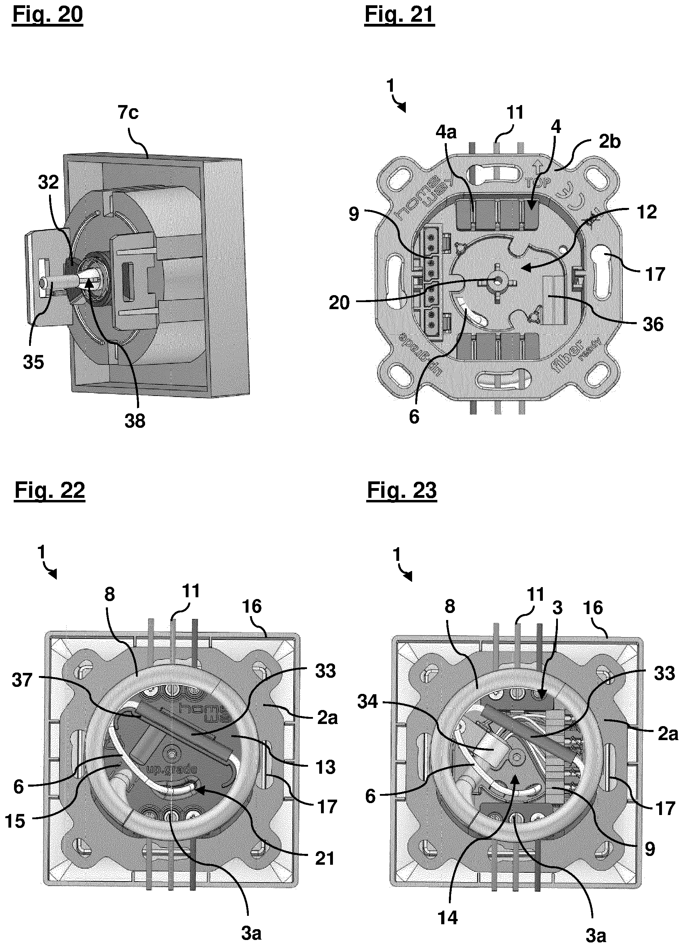

Das Funktionsmodul 7 kann derart gestaltet sein, dass das Modul beim Herausschrauben der Befestigungsschraube 35 zugleich aus dem Einsteckfach 2c herausgehoben wird. Dies wäre bei herkömmlichen Schuko-Steckdosen nicht möglich, da dort ein maximaler Berührungsschutz so lange wie möglich aufrechterhalten werden soll. Das Funktionsmodul 7 kann somit besonders komfortabel herausgenommen werden. Zu diesem Zweck kann das Funktionsmodul 7 einen geeigneten Hebeabschnitt 38 aufweisen. In der gezeigten Ausführung ist die Befestigungsschraube 35 hierzu mit einem Absatz ausgebildet (vgl. Fig. 20).

Die Stromsteckdose 18 in Fig. 15 bis 20 entspricht dabei der für Deutschland spezifischen genormten Typ F. Es versteht sich, dass entsprechende Stromkontaktmodule auch für unterschiedliche andere länderspezifische Normen bereitgestellt werden können, z.B. Typ E für Frankreich. Im Ergebnis lassen sich somit die Stromanschlüsse eines Gebäudes auf Unterputzniveau nachträglich an die gewünschte Ländernorm anpassen, ohne dass die Unterputzsteckdosen von einem Fachmann ausgetauscht werden müssen.

Weiterhin kann ein derartiges Stromkontaktmodul zusätzlich oder alternativ als Schalt- und/oder Dimmaktor ausgebildet sein, um die die zuführenden und abführenden Stromanschlüsse (L1, N, PE) trennbar zu schalten und/oder zu dimmen.

Neben der Versorgung mit elektrischer Leistung kann die Multifunktionssteckdose 1 jedoch auch weitere Nutzerfunktionen zur Verfügung stellen. Insbesondere kann die Multifunktionssteckdose 1 für die Netzwerkanbindung in einer Gebäudeinstallation genutzt werden, z.B. um Daten für ein Multimedia-Inhausnetz oder anderes Heimnetzwerk bereitzustellen bzw. auszutauschen.

Zu diesem Zweck umfasst das Basisgehäuse 2 auf der Installationsrückseite 2a die oben bereits erwähnte Netzwerkzugangsvorrichtung 5 zum Anschluss der Multifunktionssteckdose 1 an ein Datennetzwerk.

Wie in Fig. 11, 13 und 14 sichtbar ist, umfasst die Netzwerkzugangsvorrichtung 5 dazu einerseits eine Netzwerkkabel-Verbindungsleiste 9 mit einer Vielzahl von Schneidklemmkontakten 10 zur Kontaktierung eines Netzwerkkabels 8. Damit kann die Multifunktionssteckdose 1 beispielsweise an ein Ethernet-Netzwerk angeschlossen werden. Das Netzwerkkontaktmodul kann darauf aufbauend beispielsweise als Netzwerksteckdose 19 (vgl. Fig. 7 bis 9, in welchen das Funktionsmodul 7 als 8-poliger Ethernet-Steckanschluss ausgebildet ist), als Datenschnittstelle für ein kabelloses Datennetzwerk (vgl. Fig. 4 bis 6, in welchen das Funktionsmodul 7 als WLAN-Touch Access-Point ausgebildet ist), als Übertragungsmodul für Internetradio und/oder Digitalradio und/oder als Gebäudekommunikationsmodul ausgebildet sein.

Für die Nutzung der Netzwerkfunktionalitäten kann ein spezielles Funktionsmodul 7 vorgesehen sein, welches als Netzwerckontaktmodul dazu ausgebildet ist, die Netzwerkzugangsvorrichtung 5 in dem eingesteckten Zustand zu kontaktieren und über die Netzwerkzugangsvorrichtung 5 eine datentechnische Anbindung an das Datennetzwerk bereitzustellen. Die Kontaktierung der Netzwerkzugangsvorrichtung 5 kann dabei über die elektrischen Kontakte 4a der Stromkontaktvorrichtung 4 und entsprechende Gegenkontakte 7a des Funktionsmoduls 7 umgesetzt werden. Beispielsweise kann das Funktionsmodul 7 entsprechende Kontaktstifte und/oder Kontaktklemmen aufweisen. Es versteht sich hierbei, dass die Netzwerkzugangsvorrichtung 5 alternativ auch speziell für diesen Zweck bereitgestellte Kontakte aufweisen kann.

Andererseits umfasst die Netzwerkzugangsvorrichtung 5 weiterhin einen Glasfaservorratsraum 12 zur Aufnahme, Bevorratung und/oder Kontaktierung eines Glasfaserkabels 6. Damit kann die Multifunktionssteckdose 1 beispielsweise an ein Glasfasernetzwerk angeschlossen werden. Zu diesem Zweck kann ein Glasfaserkabel 6, das zumindest eine Glasfaser beinhaltet, über eine Durchführung 21 oder einen Durchbruch 15 über die Installationsrückseite 2a in die Multifunktionssteckdose 1 hineingeführt und dort angeschlossen werden. Ebenso kann das Glasfaserkabel 6 innerhalb des Glasfaservorratsraums 12 der Multifunktionssteckdose 1 vorgehalten, jedoch zunächst nicht angeschlossen sein. In diesem Fall wäre durch das interne Vorhalten eines Glasfaserkabels 6 eine spätere funktionale Erweiterung der Multifunktionssteckdose 1 durch einen Glasfaseranschluss sehr einfach möglich.

Zusätzlich wäre auch denkbar, das Glasfaserkabel 6 bereits in vorkonfektionierter Form im Vorratsraum zu bevorraten, das heißt ein entsprechender Glasfaserstecker kann bereits an einem Ende des Glasfaserkabels 6 durch eine Spleißverbindung befestigt sein. Fig. 21 zeigt als Beispiel hierzu eine Ausführung, in welcher zwei Glasfaserstecker 36 in dem Glasfaservorratsraum 12 vorhanden sind (z.B. LC/APC). So lässt sich - neben der vorteilhaften Vorbestückung von Glasfasern 6 mit Ferrulen - auch gleich von Anfang an das anschlussfertige Steckergehäuse auf der Innenseite (für einen späteren Anschluss an diverse Funktionsmodule 7) ablegen. Aber auch ein Glasfaser-Adapter zur automatischen Lichtwellenanbindung mit einem eingesteckten "Fiber-to-X-Modul" ist möglich (hier nicht ausgearbeitet), ohne dass es eines weiteren Steckvorgangs bedarf.

Auch in diesem Fall kann ein Funktionsmodul 7 als Netzwerckontaktmodul bereitgestellt werden, welches die über das Glasfasernetzwerk empfangenen Daten aufbereiten und für ein Heimnetzwerk zur Verfügung stellen kann. Zu diesem Zweck kann das Netzwerkkontaktmodul insbesondere als Medienkonverter dazu ausgebildet sein, zwischen Lichtwellensignalen und elektrischen Signalen, insbesondere CATV-Signalen, LAN-Signalen und/oder WLAN-Signalen, zu konvertieren.

Es versteht sich für den Fachmann, dass Ethernet-Netzwerke und Glasfasernetzwerke lediglich beispielhaft beschrieben sind. Ebenso ließen sich beliebige andere Datenübertragungstechniken mit der vorliegenden Multifunktionssteckdose 1 kombinieren. Beispielsweise könnten Koaxialkabel für TV/Radio oder Telefonkabel angeschlossen und die Daten über entsprechend ausgebildete Funktionsmodule 7 weiterverarbeitet werden.

Fig. 22 und 23 zeigen eine weitere Ausführungsform der Multifunktionssteckdose von hinten, bei welcher der Deckel 13 mit einer Faserführung 37 zur Führung der Glasfaser 16 und einem zusätzlichen Ablageraum für einen optionalen Spleißschutz 33 (z.B. ein Crimpspleißschutz oder ein Schrumpfspleißschutz) ausgebildet ist. Derartige Spleißarbeiten übernimmt der Fachmann vor dem Einbau des Basisgehäuses 2 in die Wand. Ferner ist das Netzwerkkabel 8 in dieser Ausführung durch einen hierfür vorgesehenen Durchbruch 15 hindurchgeführt, wobei eine Kabelschelle 34 innerhalb des Deckels 13 in dem Vorratsraum 14 für die korrekte Erdung hinzugefügt ist (Verbindung der Netzwerkkabelschirmung mit der Basisdose 2).

Als weitere Ausbildung kann ein Funktionsmodul 7 als Netzwerckontaktmodul dazu ausgebildet sein, Übertragungsdaten auf die Niederspannungsleitungen 11 der Niederspannungsanlage zu modulieren und/oder von den Niederspannungsleitungen 11 zu demodulieren. In diesem Fall muss die Multifunktionssteckdose 1 nicht notwendigerweise über zusätzliche Netzwerkanschlüsse verfügen. Vielmehr kann die Dose das Niederspannungsnetz gewissermaßen zu einem Datennetz aufwerten. Das Funktionsmodul 7 agiert in diesem Fall vergleichbar zu einem gewöhnlichen Powerline-Adapter, allerdings mit dem Unterschied, dass die vorliegende Lösung in den Unterputz integriert und damit entsprechend kompakt ausführbar ist.

Das Funktionsmodul 7 der Fig. 4 bis 6 kann ein derartiges Netzwerkkontaktmodul sein, wobei das Modul 7 per Tastenbetätigung (Touch-Bedienfeld 30) ein WLAN-Netz ein- und ausschalten oder hinsichtlich seiner Abstrahlcharakteristik anpassen kann, z.B. in Abhängigkeit von den räumlichen Gegebenheiten. Elektrische Leistung kann in diesem Fall über drei als Kontaktklemmen ausgebildete Gegenkontakte 7a von der Stromkontaktvorrichtung 4 zugeführt werden. Das Funktionsmodul 7 kann entsprechende Elektronik enthalten, z.B. in Form von gestapelten Platinen in Sandwichbauweise, beispielsweise den eigentlichen Powerline-Konverter mit Modulator und Demodulator, einen WLAN-Access-Point (z.B. 2,4GHz und/oder 5GHz gemäß IEEE 802.11.ax), eine Touch-Platine mit Bedienschnittstelle sowie Signal-LEDs. Derart lässt sich u.a. direkt am Gerät die Sendeleistung raumgerecht dimmen oder bei Bedarf die WLAN-Access-Points aus- oder einschalten. Über seitliche Klemmfedern 26 an dem Einstecksockel 7b kann das Funktionsmodul 7 in dem Einsteckfach 2c des Basisgehäuses 2 über komplementär geformte Klemmelemente 31 einrasten. Federn 29 an dem Moduldeckel 7c können den Moduldeckel 7c wackelfrei halten. Lüftungsschlitze 27 können Gerätewärme abführen, wobei auch ein metallenes Basisgehäuse 2 zur Wärmeabfuhr beitragen kann.

Damit wird ein nachträglich einsteckbares Powerline-WLAN-Touch-Modul zur Erzeugung/Aufprägung von nachrüstbaren Multimedia-Inhausnetzen auf Gebäudeinstallations-Stromversorgungsleitungen (Niederspannungsanlagen) zur drahtlosen Anbindung mobiler Endgeräte realisiert, das in bisher nicht gekannter Kompaktheit in den Unterputzaufbau einer Gebäudeinstallation integriert ist.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Multifunktionssteckdose
- 2: Basisgehäuse
- 2a: Installationsrückseite
- 2b: Funktionsvorderseite
- 2c: Einsteckfach
- 3: Stromzugangsvorrichtung
- 3a: Schraubklemme
- 4: Stromkontaktvorrichtung
- 4a: elektrischer Kontakt
- 5: Netzwerkzugangsvorrichtung
- 6: Glasfaserkabel
- 7: Funktionsmodul
- 7a: elektrischer Gegenkontakt
- 7b: Einstecksockel
- 7c: Moduldeckel
- 8: Netzwerkkabel
- 9: Netzwerkkabel-Verbindungsleiste
- 10: Schneidklemmkontakt
- 11: Niederspannungsleitung
- 12: Glasfaservorratsraum
- 13: Deckel
- 14: Vorratsraum
- 15: vorperforierter Durchbruch
- 16: Frontrahmen
- 17: Befestigungsschnittstelle
- 18: Stromsteckdose
- 19: Netzwerksteckdose
- 20: Gewindebohrung
- 21: Durchführung
- 22: Kontaktträger
- 23: Erdungskontakt
- 24: Kontaktklammer
- 25: Kontaktbrücke
- 26: Klemmfeder
- 27: Lüftungsschlitz
- 28: Unterputzdose
- 29: Feder
- 30: Touch-Bedienfeld
- 31: Klemmelement
- 32: Kindersicherung
- 33: Spleißschutz
- 34: Kabelschelle
- 35: Befestigungsschraube
- 36: Glasfaserstecker
- 37: Faserführung
- 38: Hebeabschnitt

## Patentansprüche

1. Modulare Multifunktionssteckdose (1),
mit einem Basisgehäuse (2), welches mit einer Installationsrückseite (2a) zur Unterputzinstallation der Multifunktionssteckdose (1) und mit einer Funktionsvorderseite (2b) mit einem darin eingearbeiteten Einsteckfach (2c) zur Aufnahme jeweils genau eines von mehreren auswechselbaren Funktionsmodulen (7) zur Bereitstellung von unterschiedlichen Nutzerfunktionen ausgebildet ist,
mit einer Stromzugangsvorrichtung (3), welche an der Installationsrückseite (2a) an dem Basisgehäuse (2) zum elektrischen Anschluss der Multifunktionssteckdose (1) an eine Niederspannungsanlage ausgebildet ist, und
mit einer Stromkontaktvorrichtung (4), welche mit der Stromzugangsvorrichtung (3) durch das Basisgehäuse (2) hindurch elektrisch gekoppelt und an der Funktionsvorderseite (2b) in dem Einsteckfach (2c) elektrisch berührungsgeschützt mit elektrischen Kontakten (4a) zur Kontaktierung entsprechender elektrischer Gegenkontakte (7a) eines in das Einsteckfach (2c) eingesteckten Funktionsmoduls (7) ausgebildet ist;
**dadurch gekennzeichnet, dass**
die elektrischen Kontakte (4a) der Stromkontaktvorrichtung (4) in dem Einsteckfach (2c) als berührungsgeschützte Steck- und/oder Klemmkontakte zur Aufnahme von Kontaktbrücken (25), Kontaktstiften und/oder Kontaktklemmen als Gegenkontakte (7a) an den Funktionsmodulen (7) ausgebildet sind, wobei unterschiedlichen Niederspannungsleitungen (11) zugeordnete elektrische Kontakte (4a) nebeneinander in dem Einsteckfach (2c) in Form eines Kontaktblocks angeordnet sind, wobei in dem Einsteckfach (2c) zwei Kontaktblöcke mit ihren jeweiligen elektrischen Kontakten (4a) einander gegenüberliegend zum Durschleifen von Mehrphasenwechselstromleitungen ausgebildet sind.

2. Multifunktionssteckdose nach Anspruch 1,
**dadurch gekennzeichnet,**
**dass** die Stromzugangsvorrichtung (3) mit Schraubklemmen (3a) zum Anschließen von Niederspannungsleitungen (11) der Niederspannungsanlage, insbesondere zum Durschleifen von Mehrphasenwechselstromleitungen, ausgebildet ist.

3. Multifunktionssteckdose nach Anspruch 1 oder 2,
**dadurch gekennzeichnet,**
**dass** die Stromzugangsvorrichtung (3) und die Stromkontaktvorrichtung (4) einen gemeinsamen Körper aus isolierendem Kunststoff aufweisen.

4. Multifunktionssteckdose nach einem der vorherigen Ansprüche,
**dadurch gekennzeichnet,**
**dass** ein Funktionsmodul (7) vorgesehen ist, welches als Stromkontaktmodul dazu ausgebildet ist, in dem eingesteckten Zustand zur Funktionsvorderseite (2b) hin eine Stromsteckdose (18), insbesondere eine Schutz-Kontakt-Steckdose, für die Stromversorgung eines Verbrauchers über die Niederspannungsanlage zu bilden.

5. Multifunktionssteckdose nach Anspruch 4,
**dadurch gekennzeichnet,**
**dass** mehrere Stromkontaktmodule gemäß unterschiedlichen länderspezifischen Normen unterschiedlicher Staaten vorgesehen sind.

6. Multifunktionssteckdose nach Anspruch 4 oder 5,
**dadurch gekennzeichnet,**
**dass** das Stromkontaktmodul als Schalt- und/oder Dimm-Aktor ausgebildet ist.

7. Multifunktionssteckdose nach einem der vorherigen Ansprüche,
**dadurch gekennzeichnet,**
**dass** ein Funktionsmodul (7) vorgesehen ist, welches als Netzwerkkontaktmodul dazu ausgebildet ist, in dem eingesteckten Zustand Übertragungsdaten auf die Niederspannungsleitungen (11) der Niederspannungsanlage zu modulieren und/oder von den Niederspannungsleitungen (11) zu demodulieren.

8. Multifunktionssteckdose nach einem der vorherigen Ansprüche,
**dadurch gekennzeichnet,**
**dass** eine Netzwerkzugangsvorrichtung (5) an dem Basisgehäuse (2) zum Anschluss der Multifunktionssteckdose (1) an ein Datennetzwerk über die Installationsrückseite (2a) ausgebildet ist und dass ein Funktionsmodul (7) vorgesehen ist, welches als Netzwerkkontaktmodul dazu ausgebildet ist, die Netzwerkzugangsvorrichtung (5) in dem eingesteckten Zustand zu kontaktieren und über die Netzwerkzugangsvorrichtung (5) eine datentechnische Anbindung an das Datennetzwerk bereitzustellen.

9. Multifunktionssteckdose nach Anspruch 8,
**dadurch gekennzeichnet,**
**dass** die Netzwerkzugangsvorrichtung (5) mit einem Datenanschluss zum Anschließen zumindest eines Datenkabels über die Installationsrückseite (2a) ausgebildet ist, wobei das zumindest eine Datenkabel ein Netzwerkkabel (8), ein Koaxialkabel und/oder ein Glasfaserkabel (6) umfasst.

10. Multifunktionssteckdose nach Anspruch 8 oder 9,
**dadurch gekennzeichnet,**
**dass** die Netzwerkzugangsvorrichtung (5) eine Netzwerkkabel-Verbindungsleiste (9) mit einer Vielzahl von Schneidklemmkontakten (10) zur Kontaktierung eines Netzwerkkabels (8) aufweist.

11. Multifunktionssteckdose nach einem der Ansprüche 8 bis 10, **dadurch gekennzeichnet,**
**dass** die Netzwerkzugangsvorrichtung (5) mit einem Glasfaservorratsraum (12) zur Aufnahme, Bevorratung und/oder Kontaktierung eines Glasfaserkabels (6) ausgebildet ist.

12. Multifunktionssteckdose nach einem der Ansprüche 7 bis 11, **dadurch gekennzeichnet,**
**dass** das Netzwerkkontaktmodul als zumindest eines der folgenden ausgebildet ist:
- Netzwerksteckdose (19);
- Datenschnittstelle für ein kabelloses Datennetzwerk;
- Übertragungsmodul für Internetradio und/oder Digitalradio;
- Gebäudekommunikationsmodul.

13. Multifunktionssteckdose nach einem der Ansprüche 7 bis 12, **dadurch gekennzeichnet,**
**dass** das Netzwerkkontaktmodul als Medienkonverter dazu ausgebildet ist, zwischen Lichtwellensignalen und elektrischen Signalen, insbesondere CATV-Signalen, LAN-Signalen und/oder WLAN-Signalen, zu konvertieren.

14. Multifunktionssteckdose nach einem der vorherigen Ansprüche,
**dadurch gekennzeichnet,**
**dass** die Stromzugangsvorrichtung (3) und/oder die Netzwerkzugangsvorrichtung (5) in einem durch einen abnehmbaren Deckel (13) abgeschlossenen Vorratsraum (14) auf der Installationsrückseite (2a) des Basisgehäuses ausgebildet ist.

15. Multifunktionssteckdose nach Anspruch 14,
**dadurch gekennzeichnet,**
**dass** der abnehmbare Deckel (13) eine Durchführung (21) und/oder einen vorperforierten Durchbruch (15) für das zumindest eine Datenkabel und/oder für die Niederspannungsleitungen (11) der Niederspannungsanlage aufweist.

## Claims

1. Modular multifunctional socket (1),
comprising a base housing (2) formed with a rear installation face (2a) for flush-mounted installation of the multifunctional socket (1) and with a front functional face (2b) having an insertion compartment (2c) made therein for receiving in each case exactly one of a plurality of replaceable functional modules (7) for providing different user functions,
comprising an electricity access device (3) formed on the rear installation face (2a) on the base housing (2) for electrically connecting the multifunctional socket (1) to a low-voltage system, and
comprising an electrical contact device (4) electrically coupled to the electricity access device (3) via the base housing (2) and formed on the front functional face (2b) in the insertion compartment (2c) so as to be electrically touch-proofed with electrical contacts (4a) for contacting corresponding electrical counter contacts (7a) of a functional module (7) plugged into the insertion compartment (2c);
**characterised in that** the electrical contacts (4a) of the electrical contact device (4) are formed in the insertion compartment (2c) as touch-proofed plug-in and/or clamp contacts for receiving contact bridges (25), contact pins and/or contact clamps as counter contacts (7a) on the functional modules (7), electrical contacts (4a) assigned to different low-voltage lines (11) being arranged side by side in the insertion compartment (2c), in the form of a contact block, two contact blocks being formed in the insertion compartment (2c) with the respective electrical contacts (4a) thereof opposing one another for daisy-chaining multiphase alternating current lines.

2. Multifunctional socket according to claim 1,
**characterised**
**in that** the electricity access device (3) is formed with screw terminals (3a) for connecting low-voltage lines (11) of the low-voltage system, in particular for daisy-chaining multiphase alternating current lines.

3. Multifunctional socket according to either claim 1 or claim 2,
**characterised**
**in that** the electricity access device (3) and the electrical contact device (4) have a shared body of insulating plastics material.

4. Multifunctional socket according to any of the preceding claims,
**characterised**
**in that** a functional module (7) is provided, which is formed as an electrical contact module so as, in the plugged-in state towards the front functional face (2b), to create an electrical socket (18), in particular a shockproof socket, for supplying power to a consumer via the low-voltage system.

5. Multifunctional socket according to claim 4,
**characterised**
**in that** a plurality of electrical contact modules are provided in accordance with different country-specific standards of different nations.

6. Multifunctional socket according to either claim 4 or claim 5,
**characterised**
**in that** the electrical contact module is formed as a switchable and/or dimmable actuator.

7. Multifunctional socket according to any of the preceding claims,
**characterised**
**in that** a functional module (7) is provided, which is formed as a network contact module so as, in the plugged-in state, to modulate transmission data onto the low-voltage lines (11) of the low-voltage system and/or to demodulate such data from the low-voltage lines (11).

8. Multifunctional socket according to any of the preceding claims,
**characterised**
**in that** a network access device (5) is formed on the base housing (2) for connecting the multifunctional socket (1) to a data network via the rear installation face (2a), and in that a functional module (7) is provided which is formed as a network contact module so as, in the plugged-in state, to contact the network access device (5) and to provide a data link to the data network via the network access device (5) .

9. Multifunctional socket according to claim 8,
**characterised**
**in that** the network access device (5) is formed with a data terminal for connecting at least one data cable via the rear installation face (2a), the at least one data cable comprising a network cable (8), a coaxial cable and/or a glass fibre cable (6).

10. Multifunctional socket according to either claim 8 or claim 9,
**characterised**
**in that** the network access device (5) has a network cable connecting strip (9) comprising a plurality of insulation displacement contacts (10) for contacting a network cable (8) .

11. Multifunctional socket according to any of claims 8 to 10, **characterised**
**in that** the network access device (5) is formed with a glass fibre reserve space (12) for receiving, holding in reserve and/or contacting a glass fibre cable (6).

12. Multifunctional socket according to any of claims 7 to 11, **characterised**
**in that** the network contact module is formed as at least one of the following:
- network socket (19);
- data interface for a wireless data network;
- transmission module for Internet radio and/or digital radio;
- building communication module.

13. Multifunctional socket according to any of claims 7 to 12, **characterised**
**in that** the network contact module is formed as a media converter so as to convert between light wave signals and electrical signals, in particular CATV signals, LAN signals and/or WLAN signals.

14. Multifunctional socket according to any of the preceding claims,
**characterised**
**in that** the electricity access device (3) and/or the network access device (5) are formed in a reserve space (14), sealed by a removable cover (13), on the rear installation face (2a) of the base housing.

15. Multifunctional socket according to claim 14,
**characterised**
**in that** the removable cover (13) has a feedthrough (21) and/or a pre-perforated clearance (15) for the at least one data cable and/or for the low-voltage lines (11) of the low-voltage system.

## Revendications

1. Prise multifonction modulaire (1),
comportant un boîtier de base (2) formé avec une face arrière de montage (2a) pour le montage encastré de la prise multifonction (1) et une face avant fonctionnelle (2b) dans laquelle un compartiment d'enfichage (2c) est intégré pour recevoir respectivement exactement un module parmi plusieurs modules fonctionnels interchangeables (7) pour fournir différentes fonctions utilisateur,
comportant un dispositif d'entrée électrique (3) formé sur la face arrière de montage (2a) du boîtier de base (2) pour le raccordement électrique de la prise multifonction (1) à une installation à basse tension, et
comportant un dispositif de contact électrique (4) électriquement couplé au dispositif d'entrée électrique (3) à travers le boîtier de base (2) et formé sur la face avant fonctionnelle (2b) dans le compartiment d'enfichage (2c), en étant électriquement protégé contre les contacts accidentels par des contacts électriques (4a) destinés à venir en contact avec des contacts électriques complémentaires (7a) correspondants d'un module fonctionnel (7) enfiché dans le compartiment d'enfichage (2c) ; **caractérisé en ce**
**que** les contacts électriques (4a) du dispositif de contact électrique (4) dans le compartiment d'enfichage (2c) sont réalisés sous forme de contacts à enficher et/ou de contacts à serrer protégés contre les contacts accidentels pour recevoir des ponts de contact (25), des broches de contact et/ou des bornes de contact sous forme de contacts complémentaires (7a) sur les modules fonctionnels (7), dans lequel des contacts électriques (4a) associés à différentes lignes à basse tension (11) sont disposés les uns à côté des autres dans le compartiment d'enfichage (2c) sous la forme d'un bloc de contacts, dans lequel, dans le compartiment d'enfichage (2c), deux blocs de contacts sont formés avec leurs contacts électriques (4a) respectifs opposés les uns aux autres pour le bouclage de lignes de courant alternatif polyphasé.

2. Prise multifonction selon la revendication 1,
**caractérisé en ce**
**que** le dispositif d'entrée électrique (3) ayant des bornes à vis (3a) est conçu pour le raccordement de lignes à basse tension (11) de l'installation à basse tension, en particulier pour le bouclage de lignes de courant alternatif polyphasé.

3. Prise multifonction selon la revendication 1 ou 2,
**caractérisé en ce**
**que** le dispositif d'entrée électrique (3) et le dispositif de contact électrique (4) comportent un corps commun en matière plastique isolante.

4. Prise multifonction selon l'une des revendications précédentes, **caractérisé en ce**
**qu'**un module fonctionnel (7) est prévu, lequel module est réalisé sous la forme d'un module de contact électrique pour former une prise électrique (18), en particulier une prise de contact de protection, pour l'alimentation d'un consommateur électrique par l'intermédiaire de l'installation à basse tension, lorsque la face avant fonctionnelle (2b) est dans l'état enfiché.

5. Prise multifonction selon la revendication 4,
**caractérisé en ce**
**que** plusieurs modules de contact électrique conformes à différentes normes spécifiques à chaque pays de différents états sont prévus.

6. Prise multifonction selon la revendication 4 ou 5,
**caractérisé en ce**
**que** le module de contact électrique est réalisé sous la forme d'un actionneur de commutateur et/ou de variateur.

7. Prise multifonction selon l'une des revendications précédentes,
**caractérisé en ce**
**qu'**un module fonctionnel (7) est prévu, lequel module est réalisé sous la forme d'un module de contact de réseau pour moduler des données de transmission sur les lignes à basse tension (11) de l'installation à basse tension et/ou pour démoduler les données de transmission dans les lignes à basse tension (11) à l'état enfiché.

8. Prise multifonction selon l'une des revendications précédentes,
**caractérisé en ce**
**qu'**un dispositif d'accès au réseau (5) est formé sur le boîtier de base (2) pour raccorder la prise multifonction (1) à un réseau de données par l'intermédiaire de la face arrière de montage (2a) et un module fonctionnel (7) est prévu, lequel module est réalisé sous la forme d'un module de contact de réseau pour venir en contact avec le dispositif d'accès au réseau (5) à l'état enfiché et pour établir une connexion informatique avec le réseau de données par l'intermédiaire du dispositif d'accès au réseau (5) .

9. Prise multifonction selon la revendication 8,
**caractérisé en ce**
**que** le dispositif d'accès au réseau (5) est réalisé avec une connexion de données pour raccorder au moins un câble de données par la face arrière de montage (2a), dans lequel le au moins un câble de données comprend un câble de réseau (8), un câble coaxial et/ou un câble à fibres optiques (6).

10. Prise multifonction selon la revendication 8 ou 9,
**caractérisé en ce**
**que** le dispositif d'accès au réseau (5) comporte une barrette de raccordement de câble de réseau (9) ayant une pluralité de contacts autodénudants (10) pour venir en contact avec un câble de réseau (8).

11. Prise multifonction selon l'une des revendications 8 à 10, **caractérisé en ce**
**que** le dispositif d'accès au réseau (5) est réalisé avec un espace de réserve de fibre optique (12) pour recevoir, stocker et/ou venir en contact avec un câble à fibres optiques (6).

12. Prise multifonction selon l'une des revendications 7 à 11, **caractérisé en ce**
**que** le module de contact de réseau est réalisé sous au moins une des formes suivantes :
- prise de réseau (19) ;
- interface de données pour un réseau de données sans fil ;
- module de transmission pour radio Internet et/ou radio numérique ;
- module de communication de bâtiment.

13. Prise multifonction selon l'une des revendications 7 à 12, **caractérisé en ce**
**que** le module de contact de réseau est réalisé sous la forme d'un convertisseur de média pour effectuer des conversions entre des signaux d'onde lumineuse et des signaux électriques, en particulier des signaux CATV, des signaux LAN et/ou des signaux WLAN.

14. Prise multifonction selon l'une des revendications précédentes,
**caractérisé en ce**
**que** le dispositif d'entrée électrique (3) et/ou le dispositif d'accès au réseau (5) est réalisé dans un espace de réserve (14), fermé par un couvercle amovible (13), sur la face arrière de montage (2a) du boîtier de base.

15. Prise multifonction selon la revendication 14,
**caractérisé en ce**
**que** le couvercle amovible (13) comporte une traversée (21) et/ou un passage pré-percé (15) pour le au moins un câble de données et/ou pour les lignes à basse tension (11) de l'installation à basse tension.
